# EUROPEAN PATENT APPLICATION

(11) **EP 4 753 176 A1**
(43) Date of publication of application: **03.06.2026**
(21) Application number: 24223615.6
(22) Date of filing: 30.12.2024
(51) Int. Cl.: H04J 3/06, G06F 1/14, G06F 9/48, H04J 3/14, H04L 47/24

(54) **METHOD AND DEVICE FOR REAL-TIME CLOCK SYNCHRONIZATION**

(30) Priority: 29.11.2024 CN 202411746879
(71) Applicant: New H3C Technologies Co., Ltd., Hangzhou, Zhejiang 310052 (CN)
(72) Inventor: HUANG, Man, Beijing (CN)
(74) Representative: Bandpay & Greuter

(57) **Abstract**

Provided are a method and a device for real-time clock synchronization, the method including: creating a configuration task, a synchronization packet task, a follow-up packet task, a delay request packet task, a delay response packet task, and a timestamp update task with the same priority and same time slice; running each task based on the time slice and in a round robin mode; generating a hardware interrupt by timing based on a clock synchronization interval; responding to a hardware interrupt of the timer hardware interrupt, identify a master port for the synchronization packet task, to record the master port with a synchronization identifier in a synchronization port table; detect a synchronization packet sending event and a delay request packet receiving event on the master port, and record synchronization packet timestamp information for updating the synchronization timestamp table and delay request packet timestamp information for updating the delay request timestamp table.

## Description

### TECHNICAL FIELD

The present disclosure relates to the technical field of time synchronization, in particular to a method and a device for real-time clock synchronization.

### BACKGROUND

Precision time protocol (PTP) is a time synchronization protocol, which may be used for high-precision time synchronization and frequency synchronization between network devices.

In a PTP network, for a pair of clock nodes that synchronize with each other, there exists the following master-slave relationships.

Master node and slave node: a clock node that distributes synchronization time is named as the master node, while a clock node that receives synchronization time is named as the slave node.

Master clock and slave clock: a clock on the master node is named as the master clock, while a clock on the slave node is named as the slave clock.

Master port and slave port: a PTP port on a clock node that distributes a synchronization time is named as the master port, while a PTP port that receives the synchronization time is named as the slave port. Both the master port and slave port may exist on a boundary clock (BC) or an ordinary clock (OC).

By calculating a one-way delay of a link between the master node and slave node, a clock offset of the slave clock relative to the master clock may be determined. Then, based on a current time of the slave clock and the calculated clock offset, a precise time of the slave clock may be computed.

In network scenarios that provide efficient and highly reliable services, high-frequency time synchronization is required between clock nodes, resulting in higher time accuracy for the slave clock.

Currently, PTP implementations on switches involve sending all PTP protocol packets to a central processing unit (CPU) for transmission and reception processing. When the number of ports participating in synchronization is large and the synchronization frequency is high, the processing performance of CPU is easy to be insufficient.

### SUMMARY

In view of this, the present disclosure provides a method and a device for real-time clock synchronization.

In some examples, the present disclosure provides a method for real-time clock synchronization, the method including:
creating a configuration real-time task, a synchronization packet real-time task, a follow-up packet real-time task, a delay request packet real-time task, a delay response packet real-time task and a timestamp update real-time task with a same priority and a same time slice;
based on the time slice and in a round robin mode, running the configuration real-time task to read precision time protocol (PTP) configuration information from a shared memory and write the PTP configuration information into a PTP configuration data table, running the synchronization packet real-time task to send a PTP synchronization packet through a master port, running the follow-up packet real-time task to send a PTP follow-up packet through the master port, running the delay request packet real-time task to receive a PTP delay request packet through the master port, running the delay response packet real-time task to send a PTP delay response packet through the master port, and running the timestamp update real-time task to update a synchronization timestamp table for the follow-up packet real-time task and a delay request timestamp table for the delay response packet real-time task, where a time for each round robin is less than a preset clock synchronization interval;
generating a hardware interrupt by timing based on the clock synchronization interval;
identifying, in response to the hardware interrupt, the master port for the synchronization packet real-time task from records in the PTP configuration data table, to record the master port with a synchronization identifier in a synchronization port table; and
detecting a synchronization packet sending event and a delay request packet receiving event on the master port, and recording synchronization packet timestamp information for updating the synchronization timestamp table and delay request packet timestamp information for updating the delay request timestamp table.

In some examples, the present disclosure provides a device for real-time clock synchronization, the device including:
a timer;
a real-time task control module;
a hardware timestamp module;
a non-volatile storage medium, to store a set of machine-executable instructions;
a processor, to run the machine executable instructions and write PTP configuration information into a shared memory;
the timer is to time, based on a preset clock synchronization interval, to generate a hardware interrupt;
the real-time task control module is to create a configuration real-time task, a synchronization packet real-time task, a follow-up packet real-time task, a delay request packet real-time task, a delay response packet real-time task and a timestamp update real-time task with a same priority and a same time slice; based on the time slice and in a round robin mode, run the configuration real-time task to read precision time protocol (PTP) configuration information from a shared memory and write the PTP configuration information into a PTP configuration data table, run the synchronization packet real-time task to send a PTP synchronization packet through a master port, run the follow-up packet real-time task to send a PTP follow-up packet through the master port, run the delay request packet real-time task to receive a PTP delay request packet through the master port, run the delay response packet real-time task to send a PTP delay response packet through the master port, and run the timestamp update real-time task to update a synchronization timestamp table for the follow-up packet real-time task and a delay request timestamp table for the delay response packet real-time task, where a time for each round robin is less than a preset high-frequency synchronization interval; identify, in response to the hardware interrupt, the master port for the synchronization packet real-time task from records in the PTP configuration data table, to record the master port with a synchronization identifier in a synchronization port table; and
the hardware timestamp module is to detect a synchronization packet sending event and a delay request packet receiving event on the master port, record synchronization packet timestamp information for updating the synchronization timestamp table and delay request packet timestamp information for updating the delay request timestamp table.

In the technical solution of the present disclosure, real-time clock synchronization via the master port is achieved by updating the master port in real time and scheduling all real-time tasks performing clock synchronization via the master port in a round robin manner, ensuring that all real-time tasks are scheduled in each clock synchronization interval.

### BRIEF DESCRIPTION OF DRAWINGS

FIG. 1 is a schematic diagram of an example method for real-time clock synchronization of the present disclosure.
FIG. 2 is a schematic diagram of a real-time clock synchronization system based on the present disclosure.
FIG. 3 is a block diagram for illustrating real-time clock synchronization within a clock node based on the present disclosure.
FIG. 4 is a block diagram for illustrating PTP configuration information within a clock node based on the present disclosure.
FIG. 5 is a schematic diagram of a device for real-time clock synchronization of the present disclosure.

### DETAILED DESCRIPTION

In order to make those skilled in the art better understand the technical solutions in the examples of the present disclosure, and make the above objects, features and advantages of the examples of the present disclosure more apparent and easier to understand, the technical solutions in the examples of the present disclosure will be further described in detail below with reference to the accompanying drawings.

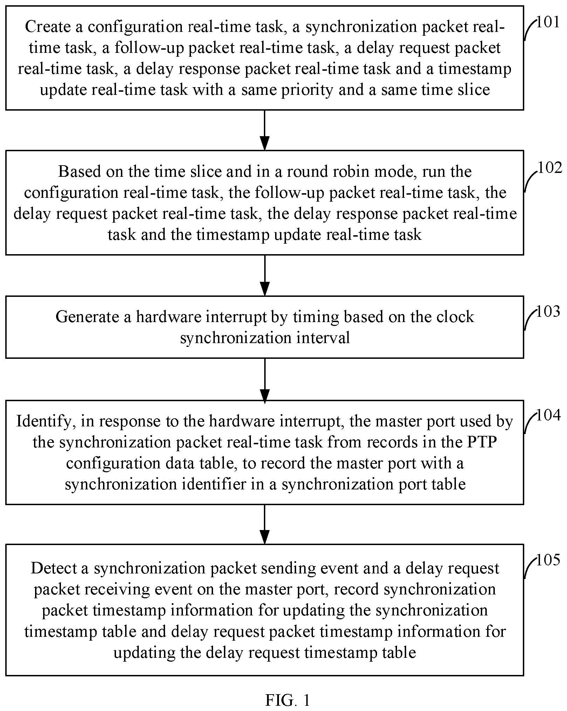

FIG. 1 is a schematic diagram of an example of a real-time clock synchronization method for high-frequency precise timing synchronization provided in the present disclosure. The method includes the following processes.

Process 101, a configuration real-time task, a synchronization packet real-time task, a follow-up packet real-time task, a delay request packet real-time task, a delay response packet real-time task and a timestamp update real-time task with the same priority and the same time slice are created.

Process 102, based on the time slice and in a round robin mode, the configuration real-time task is run to read PTP configuration information from a shared memory and write the PTP configuration information into a PTP configuration data table, the synchronization packet real-time task is run to send a PTP synchronization packet through a master port, the follow-up packet real-time task is run to send a PTP follow-up packet through the master port, the delay request packet real-time task is run to receive a PTP delay request packet through the master port, the delay response packet real-time task is run to send a PTP delay response packet through the master port, and the timestamp update real-time task is run to update a synchronization timestamp table for the follow-up packet real-time task and a delay request timestamp table for the delay response packet real-time task, where a time for each round robin is less than a preset clock synchronization interval.

Process 103, a hardware interrupt is generated by timing based on the clock synchronization interval.

Process 104, in response to the hardware interrupt, the master port for the synchronization packet real-time task is identified from records in the PTP configuration data table, to record the master port with a synchronization identifier in a synchronization port table.

Process 105, a synchronization packet sending event and a delay request packet receiving event on the master port are detected, synchronization packet timestamp information for updating the synchronization timestamp table and delay request packet timestamp information for updating the delay request timestamp table are recorded.

The beneficial effect of the example of FIG. 1 is that real-time clock synchronization via the master port is achieved by updating the master port in real time and scheduling all real-time tasks performing clock synchronization via the master port in a round robin manner, ensuring that all real-time tasks are scheduled in each clock synchronization interval.

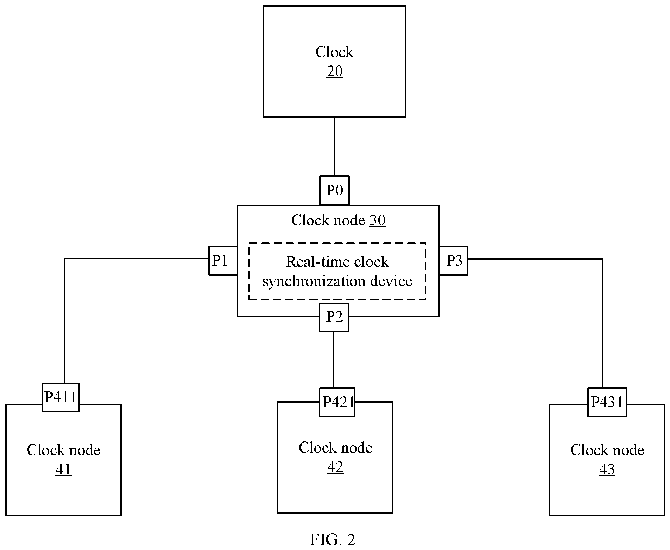

FIG. 2 is a schematic architecture diagram of a time synchronization system provided by an example of the present disclosure. As shown in FIG. 2, the time synchronization system may include an optimal clock 20, a clock node 30, and clock nodes 41, 42, 43.

The optimal clock 20 may be manually set or elected based on a Best Master Clock (BMC) algorithm, and the present disclosure is not limited.

The clock node 30 and the clock nodes 41, 42, 43 respectively determine a master-slave relationship between the clock nodes within PTP domain by means of the BMC algorithm.

The clock node 30 serves as the master node, while the clock nodes 41-43 serve as slave nodes. PTP ports P1-P3 of the clock node 30 are master ports. PTP ports P411, P421 and P431 of the clock nodes 41-43 are slave ports.

A real-time clock synchronization device of the clock node 30 distributes synchronization time in real-time through master ports P1, P2, and P3. The clock nodes 41, 42, and 43 each receive synchronization time from ports P421-P431.

In FIG. 2, the number of master ports at which the clock node 30 distributes synchronization time in real-time is only an example. The clock node 30 may also distribute synchronization time in real-time through multiple master ports, such as 48 master ports, using the real-time clock synchronization device.

The real-time clock synchronization device of the clock node 30 may be implemented by an integrated circuit deployed with an embedded real-time operating system.

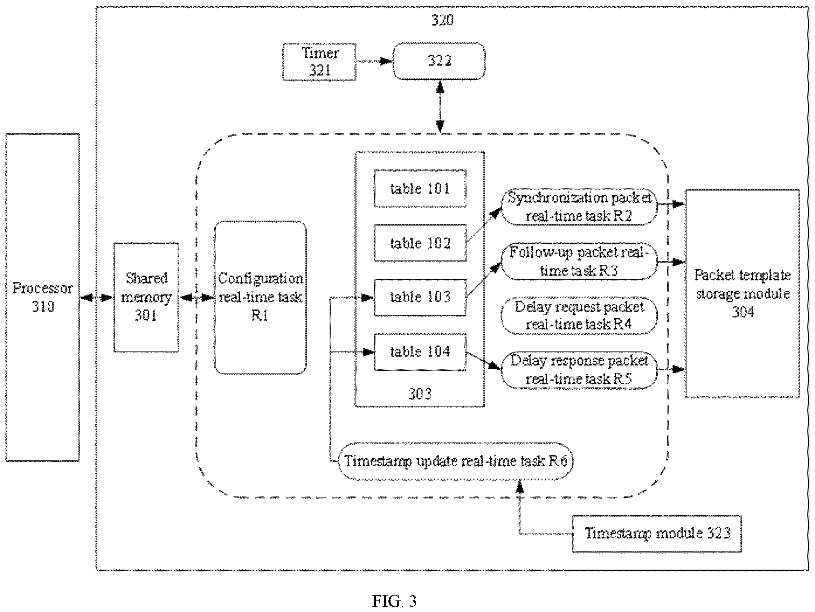

FIG. 3 is a block diagram for illustrating real-time clock synchronization within a clock node based on the present disclosure.

A processor 310 of the clock node 30 is a transactional CPU, and the real-time clock synchronization device 320 is an integrated circuit deployed with an embedded real-time operating system, such as a microcontroller unit (MCU).

The processor 310 of the clock node 30 runs the BMC algorithm. In some existing PTP clock synchronization methods, the processor 310 of the clock node controls multiple transactional tasks to send PTP protocol packets through various master ports, thus unable to provide time synchronization with high-frequency synchronization intervals. Taking a request-response mechanism as an example, when the master node sends PTP protocol packets through 48 master ports at a frequency of 128 times per second, the number of synchronous packets, follow-up packets and delay response packets sent by the transactional CPU of the master node per second is 18,432, i.e., 128 * 3 * 48. At the same time, 6144, i.e., 128*1*48 delay request packet are received. Therefore, once any of the multiple transactional tasks run by the processor for PTP synchronization has not ended, subsequent transactional tasks may not be scheduled, resulting in inability to achieve high-frequency clock synchronization.

In the present disclosure, the processor 310 of clock node 30 does not send PTP protocol packets through the master ports. Instead, the PTP configuration information for sending PTP protocol packets through master ports P1-P3 are synchronized to the real-time clock synchronization device 320 by the processor 310.

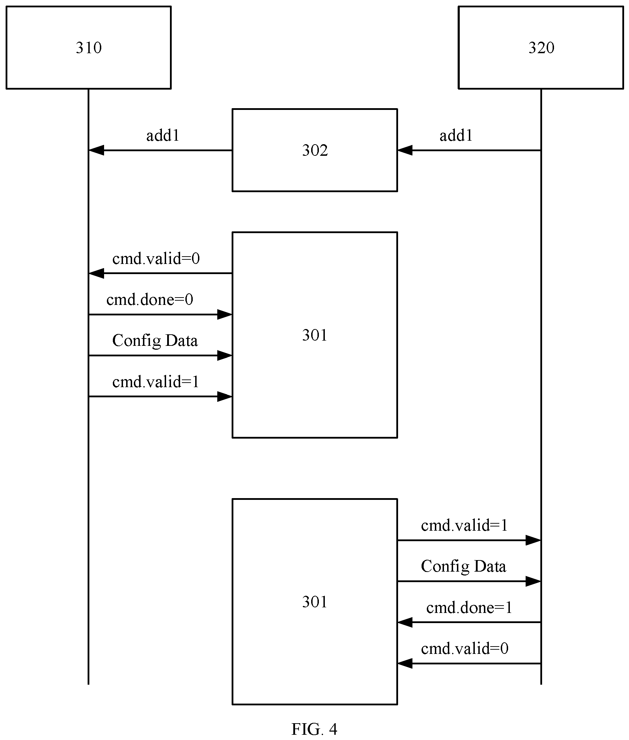

FIG. 4 is a block diagram for illustrating PTP configuration information within a clock node based on the present disclosure.

During initialization, the real-time clock synchronization device 320 allocates a shared memory 301, and writes a base address add1 of the shared memory 301 into a common register 302.

The processor 310 reads the base address add1 of the shared memory 301 from the common register 302, locates the shared memory 301 based on the base address add1, and writes PTP configuration information into the shared memory 301 to the real-time clock synchronization device 320 to complete the interaction.

A descriptor "cmd" of a starting position of the shared memory 301 includes two flag bits, a first flag bit "valid" and a second flag bit "done".

The flag bit "valid" identifies whether the PTP configuration information is stored in the shared memory 301. For example, a value of the flag bit "valid" is a binary value of 1, indicating that the shared memory 301 stores the PTP configuration information. The value of the flag bit "valid" is a binary value of 0, indicating that there is no PTP configuration information to be synchronized in the shared memory 301.

The flag bit "done" identifies whether PTP configuration information in the shared memory 301 has been read. For example, a value of the flag bit "done" is a binary value of 1, indicating that the PTP configuration information in the shared memory 301 has been read. The value of the flag bit "done" is a binary value of 0, indicating that the PTP configuration information in the shared memory 301 has not been read.

The processor 310 may set a binary value of cmd.done to 0 when cmd.valid=0, write the PTP configuration information into the shared memory 301, and then set the binary value of cmd.valid to 1.

The real-time clock synchronization device 320 schedules a configuration real-time task R1, reads cmd.valid=1 from the shared memory 301, reads the PTP configuration information from the shared memory 301, sets the binary value of cmd.done to 1, and sets the binary value of cmd.valid to 0.

Afterwards, the processor 310 reads the binary value of cmd.done in the shared memory 301 as 1, and determines that the synchronized PTP configuration information has been read.

A real-time task control module 322 of the real-time clock synchronization device 320 in FIG. 3 creates a configuration real-time task R1, a synchronization packet real-time task R2, a follow-up packet real-time task R3, a delay request packet real-time task R4, a delay response packet real-time task R5 and a timestamp update real-time task R6 with the same priority and the same time slice. The real-time task control module 322 schedules these real-time tasks R1-R6 in a round robin mode. For any for any real-time task R1-R6, in response to determining that data for the real-time task is unavailable within an execution time slice of the real-time task, the real-time task control module 322 switches the currently scheduled real-time task to a ready state, allowing the currently scheduled real-time task to exit early.

In the present disclosure, the time slices for these real-time tasks with the same priority may be planned according to a clock synchronization interval, so that all real-time tasks R1-R6 are scheduled within each clock synchronization interval. Taking a clock synchronization at 128 times per second as an example, the clock synchronization interval is 7.8 milliseconds (ms), and these real-time tasks R1-R6 are configured with the same time slice of 0.5ms.

A timer 321 times according to the clock synchronization interval of 7.8ms.

The real-time task control module 322 may schedule real-time tasks R1-R6 in a round robin mode based on the time slice of 0.5ms.

The real-time task control module 322 runs the configuration real-time task R1, reads PTP configuration information from the shared memory 301 as shown in FIG. 4, and writes the PTP configuration information to a PTP configuration data table "table101" in the data memory 303.

The real-time task control module 322 runs the synchronization packet real-time task R2. The synchronization packet real-time task R2 identifies that no master port is set with a synchronization identifier in a synchronization port table "table102". The real-time task control module 322 switches the synchronization packet real-time task R2 to the ready state.

The real-time task control module 322 runs the follow-up packet real-time task R3. The follow-up packet real-time task R3 determines that no reading timestamp information is stored in a synchronization timestamp table "table103". The real-time task control module 322 switches the follow-up packet real-time task R3 to the ready state.

The real-time task control module 322 runs the delay request packet real-time task R4. The delay request packet real-time task R4 does not receive any delay request packet through the master ports P1-P3, the real-time task control module 322 switches the delay request packet real-time task R4 to the ready state upon the time slice of the delay request packet real-time task R4 arrives.

The real-time task control module 322 runs the delay response packet real-time task R5. The delay response packet real-time task R5 determines that no delay request packet reception timestamp is stored in a delay request timestamp table "table104". The real-time task control module 322 switches the delay response packet real-time task R5 to the ready state without obtaining.

The real-time task control module 322 runs the timestamp update real-time task R6. The timestamp update real-time task R6 determines that no synchronization packet timestamp information or no delay request packet timestamp information is stored in a timestamp module 323, which is a hardware timestamp module. The real-time task control module 322 switches the timestamp update real-time task R6 to the ready state.

After one or more multiple round robins of running real-time tasks R1-R6 by the real-time task control module 322, the timer 321 reaches the clock synchronization interval of 7.8ms and outputs a hardware interrupt to a task control module 322.

The real-time task control module 322 responds to the hardware interrupt from the timer 321 by pausing a currently scheduled real-time task among real-time tasks R1-R6.

In an example, the real-time task control module 322 responds to the hardware interrupt from the timer 321 by pausing the currently scheduled timestamp update real-time task R6. The real-time task control module 322 identifies the master ports P1-P3 for the synchronization packet real-time task R2 from the records in the PTP configuration data table "table101", records the master ports P1-P3 in the synchronization port table "table102", and sets synchronization identifiers for the master ports P1-P3 respectively.

After responding to the hardware interrupt from the timer 321, the real-time task control module 322 checks whether the time slice of the paused timestamp update real-time task R6 has ended. If the time slice of the paused timestamp update real-time task has not ended, the real-time task control module 322 continues to run the timestamp update real-time task R6; if the time slice of the paused timestamp update real-time task has ended, the real-time task control module 322 switches the timestamp update real-time task R6 to the ready state and continues to round-robin schedule the configuration real-time task R1.

When the time slice for the synchronization packet real-time task R2 arrives, the real-time task control module 322 runs the synchronization packet real-time task R2. The synchronization packet real-time task R2 identifies that the master ports P1-P3 in the synchronization port table "table102" are set with the synchronization identifier, reads synchronization packet filling data for the master ports P1-P3 from the PTP configuration information in the PTP configuration data table "table101", calls a synchronization packet template from a packet template storage module 304, generates synchronization packets sent sent through each of the master ports P1-P3 based on the read synchronization packet filling data for the master ports P1-P3 and the synchronization packet template, and sends synchronization packets through the master ports P1-P3 respectively.

In the present disclosure, the PTP configuration information synchronized by the processor 310 includes all the information needed to send all kinds of PTP packets for PTP clock synchronization. In this way, when the synchronization packet real-time task R2, the follow-up packet real-time task R3, and the delay response packet real-time task R5 call various templates stored in the packet template storage module 304, data of a PTP protocol packet and a header field value of the PTP protocol packet are obtained from the PTP configuration information.

The timestamp module 323 detects synchronization packet sending events on the master ports P1-P3 and records respective synchronization packet timestamp information for master ports P1-P3. In an example, the synchronization packet timestamp information for the master port P1 includes: an identifier of the master port P1, an identifier of the synchronization packet sent by the master port P1, and a sending timestamp. The synchronization packet timestamp information for the master port P2 includes: an identifier of master port P2, an identifier of the synchronization packet sent by the master port P2, and a sending timestamp. The synchronization timestamp information for master port P3 includes: an identifier of the master port P3, an identifier of the synchronization packet sent by the master port P3, and a sending timestamp. The identifier of synchronization packet may include packet sequence number or session identifier for matching synchronization packet (sync packet) and follow-up packet in a PTP protocol.

When the time slice for the timestamp update real-time task R6 arrives, the real-time task control module 322 runs the timestamp update real-time task R6. The timestamp update real-time task R6 reads the synchronization packet timestamp information for the master ports P1, P2, and P3 from the timestamp module 323, updates the information to the synchronization timestamp table "table103", and clears the synchronization packet timestamp information for the master ports P1, P2, and P3 recorded in the timestamp module 323.

When the time slice for the follow-up packet real-time task R3 arrives, the real-time task control module 322 runs the follow-up packet real-time task R3. The follow-up packet real-time task R3 obtains the synchronization packet timestamp information for each of the master ports P1-P3 from the synchronization timestamp table "table103", reads the follow-up packet filling data for each of the master ports P1-P3 from the PTP configuration information in the PTP configuration data table "table 101", calls a follow-up packet template from the packet template storage module 304, and generates the follow-up packets sent through each of the master ports P1-P3 based on the respective follow-up packet filling data, synchronization packet identifier, synchronization packet sending timestamp, and the follow-up packet template for the master ports P1-P3.

In FIG. 2, after receiving the follow-up packets, clock nodes 41-43 send delay request packets to clock node 30, respectively.

When the time slice for the delay request packet real-time task R4 arrives, the real-time task control module 322 runs the delay request packet real-time task R4. The delay request packet real-time task R4 receives PTP delay request packets from clock nodes 41-43 through the master ports P1, P2, and P3, respectively.

The timestamp module 323 detects delay request packet receiving events on each of the master ports P1, P2, and P3, and records delay request packet timestamp information for each of the master ports P1, P2, and P3. The delay request packet timestamp information for the master port P1 includes: an identifier of master port P1, an identifier of the delay request packet received by the master port P1, and a receiving timestamp. The delay request packet timestamp information for the master port P2 includes: an identifier of master port P2, an identifier of the delay request packet received by the master port P2, and a receiving timestamp. The delay request packet timestamp information for the master port P3 includes: an identifier of master port P3, an identifier of the delay request packet received by the master port P3, and a receiving timestamp.

When the time slice for the timestamp update real-time task R6 arrives, the real-time task control module 322 runs the timestamp update real-time task R6. The timestamp update real-time task R6 reads the delay request packet timestamp information for the master ports P1, P2, and P3 from the timestamp module 323, updates the information to the delay request timestamp table "table104", and clears the delay request packet timestamp information for the master ports P1, P2, and P3 recorded in the timestamp module 323.

When the time slice of the delay response packet real-time task R5 arrives, the real-time task control module 322 runs the delay response packet real-time task R5. The delay response packet real-time task R5 obtains the delay request packet timestamp information for each of the master ports P1-P3 from the delay request timestamp table "table104", obtains delay response packet filling data for each of the master ports P1-P3 from the PTP configuration information in the PTP configuration data table "table 101", calls a delay response packet template from the packet template storage module 304, and generates delay response packets sent through each of the master ports P1-P3 based on the respective delay response packet filling data, delay request packet timestamp information, and delay response packet template, these delay response packets are then sent through the master ports P1-P3.

In the present disclosure, the time for the real-time synchronization device 320 to run the real-time tasks R1-R6 in round robin is less than the interval of one high-frequency clock synchronization, so that the execution order of these real-time tasks R1-R6 is decoupled, and parallel processing is realized with extremely fast round-robin scheduling time.

In the present disclosure, the real-time synchronization device 320 reads the synchronization packet timestamp information and the delay request packet timestamp information from the timestamp module 323 by running the timestamp update real-time task R6, without adopting a hardware interrupt mode, thus ensuring the absolute reliability of the hardware interrupt of the hardware timer 321 in the real-time synchronization device 320, and ensuring the stable execution of real-time clock synchronization based on the consistent synchronization interval.

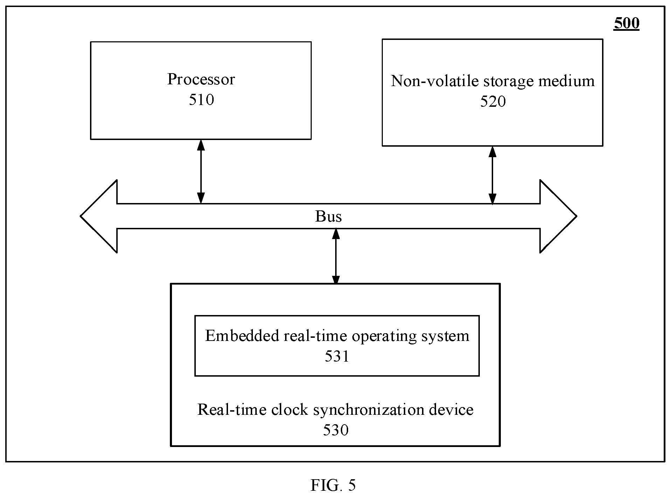

Referring to FIG. 5, an example of the present disclosure further provides a network apparatus 500, as shown in FIG. 5, which includes a processor 510, a non-volatile storage medium 520 and a real-time clock synchronization device 530. The real-time clock synchronization device 530 with an embedded real-time operating system 531 has a hardware timer, a real-time task control module, a hardware timestamp module, a clock synchronization data storage module and a packet template storage module.

The processor 510 runs machine executable instructions stored in the non-volatile storage medium 520 and writes PTP configuration information into a shared memory of the real-time clock synchronization device 530.

The timer is to time, based on a preset clock synchronization interval, to generate a hardware interrupt.

The real-time task control module is to create a configuration real-time task, a synchronization packet real-time task, a follow-up packet real-time task, a delay request packet real-time task, a delay response packet real-time task and a timestamp update real-time task with the same priority and the same time slice; based on the time slice and in a round robin mode, run the configuration real-time task to read precision time protocol (PTP) configuration information from a shared memory and write the PTP configuration information into a PTP configuration data table, run the synchronization packet real-time task to send a PTP synchronization packet through a master port, run the follow-up packet real-time task to send a PTP follow-up packet through the master port, run the delay request packet real-time task to receive a PTP delay request packet through the master port, run the delay response packet real-time task to send a PTP delay response packet through the master port, and run the timestamp update real-time task to update a synchronization timestamp table for the follow-up packet real-time task and a delay request timestamp table for the delay response packet real-time task, where a time for each round robin is less than a preset high-frequency synchronization interval; identify, in response to the hardware interrupt, the master port for the synchronization packet real-time task from records in the PTP configuration data table, to record the master port with a synchronization identifier in a synchronization port table.

The hardware timestamp module is to detect a synchronization packet sending event and a delay request packet receiving event on the master port, and record synchronization packet timestamp information for updating the synchronization timestamp table and delay request packet timestamp information for delay request timestamp table.

The clock synchronization data storage module is to store the PTP configuration data table, the synchronization port table, the synchronization timestamp table and the delay request timestamp table.

The packet template storage module is to store a synchronous packet template, a follow-up packet template and a delay response packet template.

The real-time task control module, when running the synchronization packet real-time task to send a PTP synchronization packet through a master port, is further to: identify the synchronization identifier of the master port from the synchronization port table; read synchronization packet filling data of the master port from the PTP configuration data table; call a synchronization packet template; generate the PTP synchronization packet based on the synchronization packet filling data and the synchronization packet template; send the PTP synchronization packet through the master port; and delete the synchronization identifier of the master port in the synchronization port table.

The real-time task control module, when running the follow-up packet real-time task to send a PTP follow-up packet through the master port, is further to: obtain, from the synchronization timestamp table, a synchronization packet identifier and a synchronization packet sending timestamp of the PTP synchronization packet sent by the master port; read, from the PTP configuration data table, follow-up packet filling data of the master port; call a follow-up packet template; generate the PTP follow-up packet based on the follow-up packet filling data, the synchronization packet identifier, the synchronization packet sending timestamp and the follow-up packet template; and send the PTP follow-up packet through the master port.

The real-time task control module, when running the delay response packet real-time task to send a PTP delay response packet through the master port, is further to: obtain, from the delay request timestamp table, a delay request packet identifier and a delay request packet receiving timestamp of the delay request packet received by the master port; read, from the PTP configuration data table, delay response packet filling data of the master port; call a delay response packet template; generate the PTP delay response packet based on the delay response packet filling data, the delay request packet identifier, the delay request packet receiving timestamp and the delay response packet template; and send the PTP delay response packet through the master port.

The real-time task control module, when running the timestamp update real-time task to update a synchronization timestamp table for the follow-up packet real-time task, is further to: read, from the synchronization packet timestamp information, a synchronization packet identifier and a synchronization packet sending timestamp associated with the master port; update the read synchronization packet identifier and the synchronization packet sending timestamp to the synchronization timestamp table; and delete the synchronization packet timestamp information.

The real-time task control module, when running the timestamp update real-time task to update a delay request timestamp table for the delay response packet real-time task, is further to: read, from the delay request packet timestamp information, a delay request packet identifier and a delay request packet receiving timestamp associated with the master port; update the read delay request packet identifier and the delay request packet receiving timestamp to the delay request timestamp table; and delete the delay request packet timestamp information.

The real-time task control module is further to, for any real-time task of the configuration real-time task, the synchronization packet real-time task, the follow-up packet real-time task, the delay request packet real-time task, the delay response packet real-time task and the timestamp update real-time task, in response to determining that data for the real-time task is unavailable within an execution time slice of the real-time task, switch the real-time task to a ready state.

The real-time task control module, after responding to the hardware interrupt, is further to, for any interrupted real-time task of the configuration real-time task, the synchronization packet real-time task, the follow-up packet real-time task, the delay request packet real-time task, the delay response packet real-time task and the timestamp update real-time task, in response to determining that the time slice of the interrupted real-time task ends, switch the interrupted real-time task to a ready state.

When the embedded real-time operating system 531 is running, the specific implementation process of the MCU chip to achieve time synchronization is detailed in the implementation process of the corresponding steps in the above method, and will not be repeated here.

## Claims

1. A method for real-time clock synchronization, comprising:
creating a configuration real-time task, a synchronization packet real-time task, a follow-up packet real-time task, a delay request packet real-time task, a delay response packet real-time task and a timestamp update real-time task with a same priority and a same time slice;
based on the time slice and in a round robin mode,
running the configuration real-time task to read precision time protocol, PTP, configuration information from a shared memory and write the PTP configuration information into a PTP configuration data table,
running the synchronization packet real-time task to send a PTP synchronization packet through a master port,
running the follow-up packet real-time task to send a PTP follow-up packet through the master port,
running the delay request packet real-time task to receive a PTP delay request packet through the master port,
running the delay response packet real-time task to send a PTP delay response packet through the master port, and
running the timestamp update real-time task to update a synchronization timestamp table for the follow-up packet real-time task and a delay request timestamp table for the delay response packet real-time task,
wherein a time for each round robin is less than a preset clock synchronization interval;
generating a hardware interrupt by timing based on the clock synchronization interval;
identifying, in response to the hardware interrupt, the master port for the synchronization packet real-time task from records in the PTP configuration data table, to record the master port with a synchronization identifier in a synchronization port table; and
detecting a synchronization packet sending event and a delay request packet receiving event on the master port; and
recording synchronization packet timestamp information for updating the synchronization timestamp table and delay request packet timestamp information for updating the delay request timestamp table.

2. The method according to claim 1, wherein the running the synchronization packet real-time task to send a PTP synchronization packet through a master port comprises:
identifying the synchronization identifier of the master port from the synchronization port table;
reading synchronization packet filling data of the master port from the PTP configuration data table;
calling a synchronization packet template;
generating the PTP synchronization packet based on the synchronization packet filling data and the synchronization packet template;
sending the PTP synchronization packet through the master port; and
deleting the synchronization identifier of the master port in the synchronization port table.

3. The method according to claim 1 or 2, wherein the running the follow-up packet real-time task to send a PTP follow-up packet through the master port comprises:
obtaining, from the synchronization timestamp table, a synchronization packet identifier and a synchronization packet sending timestamp of the PTP synchronization packet sent by the master port;
reading, from the PTP configuration data table, follow-up packet filling data of the master port;
calling a follow-up packet template;
generating the PTP follow-up packet based on the follow-up packet filling data, the synchronization packet identifier, the synchronization packet sending timestamp and the follow-up packet template; and
sending the PTP follow-up packet through the master port.

4. The method according to any one of claims 1 to 3, wherein the running the delay response packet real-time task to send a PTP delay response packet through the master port comprises:
obtaining, from the delay request timestamp table, a delay request packet identifier and a delay request packet receiving timestamp of the delay request packet received by the master port;
reading, from the PTP configuration data table, delay response packet filling data of the master port;
calling a delay response packet template;
generating the PTP delay response packet based on the delay response packet filling data, the delay request packet identifier, the delay request packet receiving timestamp and the delay response packet template; and
sending the PTP delay response packet through the master port.

5. The method according to any one of claims 1 to 4,
wherein the running the timestamp update real-time task to update a synchronization timestamp table for the follow-up packet real-time task comprises:
reading, from the synchronization packet timestamp information, a synchronization packet identifier and a synchronization packet sending timestamp associated with the master port;
updating the read synchronization packet identifier and the synchronization packet sending timestamp to the synchronization timestamp table; and
deleting the synchronization packet timestamp information;
wherein the running the timestamp update real-time task to update a delay request timestamp table for the delay response packet real-time task comprises:
reading, from the delay request packet timestamp information, a delay request packet identifier and a delay request packet receiving timestamp associated with the master port;
updating the read delay request packet identifier and the delay request packet receiving timestamp to the delay request timestamp table; and
deleting the delay request packet timestamp information.

6. The method according to any one of claims 1 to 5, further comprising:
for any real-time task of the configuration real-time task, the synchronization packet real-time task, the follow-up packet real-time task, the delay request packet real-time task, the delay response packet real-time task and the timestamp update real-time task, in response to determining that data for the real-time task is unavailable within an execution time slice of the real-time task, switching the real-time task to a ready state.

7. The method according to any one of claims 1 to 6, further comprising:
after responding to the hardware interrupt,
for any interrupted real-time task of the configuration real-time task, the synchronization packet real-time task, the follow-up packet real-time task, the delay request packet real-time task, the delay response packet real-time task and the timestamp update real-time task, in response to determining that the time slice of the interrupted real-time task ends, switching the interrupted real-time task to a ready state.

8. A device for real-time clock synchronization, comprising:
a timer;
a real-time task control module;
a hardware timestamp module;
a non-volatile storage medium, to store a set of machine-executable instructions;
a processor, to run the machine executable instructions and write precision time protocol, PTP, configuration information into a shared memory;
the timer is to time, based on a preset clock synchronization interval, to generate a hardware interrupt;
the real-time task control module is to create a configuration real-time task, a synchronization packet real-time task, a follow-up packet real-time task, a delay request packet real-time task, a delay response packet real-time task and a timestamp update real-time task with a same priority and a same time slice;
based on the time slice and in a round robin mode,
run the configuration real-time task to read PTP configuration information from a shared memory and write the PTP configuration information into a PTP configuration data table,
run the synchronization packet real-time task to send a PTP synchronization packet through a master port,
run the follow-up packet real-time task to send a PTP follow-up packet through the master port,
run the delay request packet real-time task to receive a PTP delay request packet through the master port,
run the delay response packet real-time task to send a PTP delay response packet through the master port, and
run the timestamp update real-time task to update a synchronization timestamp table for the follow-up packet real-time task and a delay request timestamp table for the delay response packet real-time task,
wherein a time for each round robin is less than a preset high-frequency synchronization interval; and
identify, in response to the hardware interrupt, the master port for the synchronization packet real-time task from records in the PTP configuration data table, to record the master port with a synchronization identifier in a synchronization port table; and
the hardware timestamp module is to detect a synchronization packet sending event and a delay request packet receiving event on the master port, and
record synchronization packet timestamp information for updating the synchronization timestamp table and delay request packet timestamp information for updating the delay request timestamp table.

9. The device according to claim 8, further comprising:
a clock synchronization data storage module, to store the PTP configuration data table, the synchronization port table, the synchronization timestamp table and the delay request timestamp table; and
a packet template storage module, to store a synchronous packet template, a follow-up packet template and a delay response packet template.

10. The device according to claim 9, wherein the real-time task control module, when running the synchronization packet real-time task to send a PTP synchronization packet through a master port, is further to:
identify the synchronization identifier of the master port from the synchronization port table;
read synchronization packet filling data of the master port from the PTP configuration data table;
call a synchronization packet template;
generate the PTP synchronization packet based on the synchronization packet filling data and the synchronization packet template;
send the PTP synchronization packet through the master port; and
delete the synchronization identifier of the master port in the synchronization port table.

11. The device according to claim 9 or 10, wherein the real-time task control module, when running the follow-up packet real-time task to send a PTP follow-up packet through the master port, is further to:
obtain, from the synchronization timestamp table, a synchronization packet identifier and a synchronization packet sending timestamp of the PTP synchronization packet sent by the master port;
read, from the PTP configuration data table, follow-up packet filling data of the master port;
call a follow-up packet template;
generate the PTP follow-up packet based on the follow-up packet filling data, the synchronization packet identifier, the synchronization packet sending timestamp and the follow-up packet template; and
send the PTP follow-up packet through the master port.

12. The device according to any one of claims 9 to 11, wherein the real-time task control module, when running the delay response packet real-time task to send a PTP delay response packet through the master port, is further to:
obtain, from the delay request timestamp table, a delay request packet identifier and a delay request packet receiving timestamp of the delay request packet received by the master port;
read, from the PTP configuration data table, delay response packet filling data of the master port;
call a delay response packet template;
generate the PTP delay response packet based on the delay response packet filling data, the delay request packet identifier, the delay request packet receiving timestamp and the delay response packet template; and
send the PTP delay response packet through the master port.

13. The device according to any one of claims 9 to 12,
wherein the real-time task control module, when running the timestamp update real-time task to update a synchronization timestamp table for the follow-up packet real-time task, is further to:
read, from the synchronization packet timestamp information, a synchronization packet identifier and a synchronization packet sending timestamp associated with the master port;
update the read synchronization packet identifier and the synchronization packet sending timestamp to the synchronization timestamp table; and
delete the synchronization packet timestamp information;
wherein the real-time task control module, when running the timestamp update real-time task to update a delay request timestamp table for the delay response packet real-time task, is further to:
read, from the delay request packet timestamp information, a delay request packet identifier and a delay request packet receiving timestamp associated with the master port;
update the read delay request packet identifier and the delay request packet receiving timestamp to the delay request timestamp table; and
delete the delay request packet timestamp information.

14. The device according to any one of claims 9 to 13, wherein,
the real-time task control module is further to, for any real-time task of the configuration real-time task, the synchronization packet real-time task, the follow-up packet real-time task, the delay request packet real-time task, the delay response packet real-time task and the timestamp update real-time task, in response to determining that data for the real-time task is unavailable within an execution time slice of the real-time task, switch the real-time task to a ready state.

15. The device according to any one of claims 9 to 14, wherein,
the real-time task control module, after responding to the hardware interrupt, is further to, for any interrupted real-time task of the configuration real-time task, the synchronization packet real-time task, the follow-up packet real-time task, the delay request packet real-time task, the delay response packet real-time task and the timestamp update real-time task, in response to determining that the time slice of the interrupted real-time task ends, switch the interrupted real-time task to a ready state.
